(19) Europäisches Patentamt
European Patent Office
Office européen des brevets

(11) **EP 2 765 390 B1**

(12) **FASCICULE DE BREVET EUROPEEN**

(45) Date de publication et mention
de la délivrance du brevet:
**20.01.2016 Bulletin 2016/03**

(51) Int Cl.:
**G01C 21/16** *(2006.01)* **G01S 5/02** *(2006.01)*
**G01S 19/49** *(2010.01)*

(21) Numéro de dépôt: **14152326.6**

(22) Date de dépôt: **23.01.2014**

(54) **Système et procédé d'aide à la navigation d'un aéronef**

Navigationshilfssystem und -verfahren für Luftfahrzeug

System and method for assisting with the navigation of an aircraft

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.02.2013 FR 1300288**

(43) Date de publication de la demande:
**13.08.2014 Bulletin 2014/33**

(73) Titulaire: **Dassault Aviation
75008 Paris (FR)**

(72) Inventeur: **Marcon, Pierre
92190 Meudon (FR)**

(74) Mandataire: **Blot, Philippe Robert Emile
Cabinet Lavoix
2, place d'Estienne d'Orves
75441 Paris Cedex 09 (FR)**

(56) Documents cités:
**FR-A1- 2 866 423       FR-A1- 2 898 196
US-A1- 2003 083 792**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un système d'aide à la navigation selon le préambule de la revendication 1.

Elle s'applique en particulier à l'aide au guidage d'un aéronef lors de phases de vol critiques telles que le décollage, l'approche finale ou l'atterrissage. Le guidage d'un aéronef lors de telles phases de vol nécessite des informations de localisation de l'aéronef d'une grande précision, mais aussi un temps de déclaration des pannes (ou TTA pour « Time To Alert ») faible.

On entend par temps de déclaration des pannes l'intervalle de temps maximal entre la réception de signaux fournissant une précision dégradée et la signalisation à l'utilisateur de la dégradation de cette précision. Ce temps de déclaration des pannes doit être aussi faible que possible, de manière à signaler une dégradation de la précision à l'utilisateur le plus rapidement possible.

Le guidage d'un aéronef lors des phases d'approche et d'atterrissage est généralement réalisé au moyen d'un système d'atterrissage aux instruments, ou ILS pour « Instrument Landing System ». Ce système de radio-navigation permet de fournir des approches de grande précision. Par exemple, les ILS de catégorie I (ILS Cat I) permettent d'atteindre des hauteurs de décision de 200 pieds (soit 61 m). De tels systèmes nécessitent cependant la présence au sol, autour de la piste d'atterrissage, de multiples antennes et balises.

Un tel guidage peut être remplacé par un guidage basé sur un système de navigation par satellites. On entend ici par système de navigation par satellites un système dédié à la navigation du type GNSS (pour « Global Navigation Satellite System »), tel que le système GPS (pour « Global Positioning System » c'est-à-dire « Système de localisation mondial ») ou le système GLONASS.

De manière connue, ces systèmes sont basés sur la réception par un récepteur de signaux radiofréquences émis par des satellites d'une constellation de satellites, et la détermination par le récepteur, à partir de chaque signal reçu, d'une distance entre le récepteur et le satellite émetteur du signal, pour en déduire la position du récepteur.

La précision de ces systèmes de navigation est affectée par plusieurs types d'erreurs, en particulier des erreurs atmosphériques, des erreurs de chronométrage et d'orbite des satellites, et des erreurs liées aux trajets multiples des signaux.

Pour corriger certaines de ces erreurs, il est connu de coupler les systèmes de navigation par satellites GPS ou GLONASS à un système d'augmentation spatiale de type SBAS (« Space Based Augmentation System »). Il s'agit par exemple du système EGNOS (Geostationary Navigation Overlay Service) ou du système WAAS (Wide Area Augmentation System).

On connaît par ailleurs du document FR 2 898 196 A1 un procédé de positionnement d'un aéronef par combinaison de données de distances séparant l'aéronef de satellites et de données inertielles.

L'association du système d'augmentation spatiale au système GPS permet d'obtenir des informations de position plus précises (jusqu'à un mètre horizontalement et deux mètres verticalement) et plus fiables que celles obtenues par le seul système GPS.

Notamment, le système d'augmentation spatiale présente des redondances permettant l'identification de dégradations des données du système GPS, GLONASS ou SBAS, et leur signalisation à l'utilisateur dans un délai de six secondes.

Une telle association permet l'obtention d'approches performantes dites « approches LPV » (pour « Localizer Performance with Vertical guidance »), avec des hauteurs de décision de 250 à 200 pieds, soit environ de 76 à 61 mètres, donc comparables à celles des ILS Cat I, sans toutefois nécessiter l'installation d'antennes et de balises ILS à proximité immédiate des pistes d'atterrissage.

Le système d'augmentation spatiale, couplé au système GPS, fournit à la fois des informations de position et des limites de protection associées, représentant la garantie de précision horizontale et verticale donnée par le système. Lorsque la précision des informations de position diminue, les limites de protection augmentent. Cette augmentation est signalée à l'utilisateur au maximum six secondes après l'apparition de la dégradation de la précision, cette durée correspondant au temps de déclaration de panne du système.

Par ailleurs, lorsqu'au moins une de ces limites de protection dépasse une précision minimale, prédéfinie sous la forme d'une limite d'alerte, un signal d'alerte est émis à destination de l'utilisateur.

Un tel délai entre la dégradation de la précision et sa signalisation à l'utilisateur signifie que pendant cette durée de six secondes, le système de guidage est susceptible de diffuser des informations de position de l'aéronef entachées d'une erreur non compatible avec les besoins en performance de l'utilisateur, sans que l'utilisateur n'en soit alerté. Or, dans le cadre d'un guidage en approche finale, au décollage ou à l'atterrissage, de telles erreurs, si elles sont détectées tardivement, peuvent conduire à des situations dangereuses.

L'invention a donc pour but de résoudre ces inconvénients.

A cet effet, l'invention a pour objet un système selon la revendication 1.

Selon d'autres aspects de l'invention, le système comprend l'une ou plusieurs des caractéristiques des revendications 2 à 8.

L'invention a également pour objet un procédé d'aide à la navigation d'un aéronef selon la revendication 9.

Selon d'autres aspects de l'invention, le procédé comprend l'une ou plusieurs des caractéristiques des revendications 10 et 11.

L'invention sera mieux comprise à la lecture de la description qui va suivre, donnée uniquement à titre d'exemple, et faite en se référant aux dessins annexés, sur lesquels :

- la Figure 1 est un schéma d'un système d'aide à la navigation selon un premier mode de réalisation de l'invention ;
- la Figure 2 est un schéma synoptique d'un procédé d'aide à la navigation mis en oeuvre par le système de la Figure 1 ;
- la Figure 3 est un schéma d'un système d'aide à la navigation selon un deuxième mode de réalisation de l'invention ;
- la Figure 4 est un schéma synoptique d'un procédé d'aide à la navigation mis en oeuvre par le système de la Figure 3.

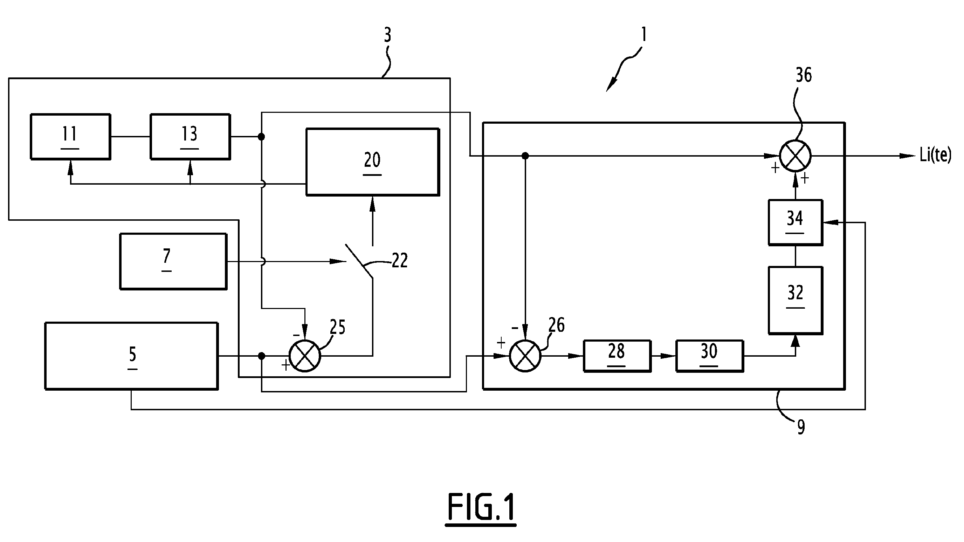

On a représenté sur la Figure 1, de manière schématique, un système 1 d'aide à la navigation selon un premier mode de réalisation de l'invention, destiné à être embarqué dans un aéronef.

Le système 1 comporte une centrale 3 de navigation inertielle, un module 5 de positionnement par satellites, un module 7 de sélection et un module 9 de localisation.

La centrale 3 de navigation inertielle est propre à fournir des premières informations de position de l'aéronef résultant au moins en partie de mesures accélérométriques et gyrométriques.

A cette fin, la centrale 3 de navigation comprend des capteurs accélérométriques et gyrométriques 11.

Les capteurs 11 comprennent plusieurs accéléromètres, typiquement trois, d'orientations fixes par rapport à l'aéronef, propres à fournir des valeurs d'accélération non gravitationnelle de l'aéronef selon ces axes.

Ces capteurs 11 comprennent en outre plusieurs gyromètres, typiquement trois, ayant chacune un axe fixe par rapport à l'aéronef et propres à fournir des valeurs de vitesse de rotation angulaire autour de ces axes.

La centrale 3 de navigation comprend en outre un calculateur 13. Le calculateur 13 est configuré pour déterminer, à partir de mesures accélérométriques et gyrométriques issues des capteurs 11, des premières informations de position géographique et de vitesse de l'aéronef.

En particulier, le calculateur 13 est configuré pour déterminer une position $p_i(t)$ de l'aéronef en tout instant $t$ à partir de sa position en un instant antérieur $t_0$, par intégration des mesures accélérométriques et gyrométriques issues des capteurs 11 entre les instants $t_0$ et $t$, et à partir d'une correction apportée à ces informations. Cette correction est destinée à améliorer la précision de la position déterminée, par rapport à une position qui serait estimée à partir des seules données inertielles.

Ces premières informations de position seront appelées par la suite données inertielles.

Le module 5 de positionnement par satellites est propre à recevoir des signaux de positionnement émis par un système de satellites, et à déterminer, à partir de ces signaux, des deuxièmes informations de position de l'aéronef, appelées par la suite données GPS.

Le module 5 de positionnement comprend un ou plusieurs récepteurs, propres à recevoir à la fois des signaux émis par des satellites d'un système de positionnement par satellites GNSS, tel que le système GPS, et des signaux d'augmentation spatiale émis par des satellites d'un système d'augmentation de type SBAS.

On considérera par la suite que le système de positionnement par satellites est le système GPS, et on appellera ainsi signaux GPS les signaux émis par les satellites de ce système. On appellera par ailleurs signaux SBAS les signaux d'augmentation spatiale.

Les signaux SBAS, distincts des signaux GPS, comprennent un ensemble de corrections destinées à améliorer les performances du système de positionnement par satellites, en particulier la précision et la fiabilité des informations de positions déterminées à partir des signaux GPS.

Le module 5 de positionnement est configuré pour déduire, à partir des signaux GPS et des signaux SBAS émis en un instant $t$ donné, un positionnement géographique de l'aéronef $p_{GPS}(t)$, exprimé au moyen de trois coordonnées (par exemple la latitude et longitude dans le géoïde de référence WGS84 ainsi que l'altitude au dessus de ce géoïde de référence), et appelé par la suite position GPS, ainsi que les limites de protection associées à cette position GPS.

Ces limites de protection comprennent classiquement une précision verticale minimale (VPL) et une précision horizontale minimale (HPL) assurées. Ces limites de protection sont fonction de la précision des données GPS et SBAS reçues par le module 5. Lorsque la précision de la position GPS diminue, les limites de protection augmentent.

Par ailleurs, le module 5 de positionnement est propre à détecter une dégradation de cette précision, et à alerter l'utilisateur de cette dégradation, au moyen d'un signal d'alerte. Une dégradation de la précision correspond par exemple à une précision verticale minimale VPL supérieure à un seuil d'alerte vertical, noté VAL, et/ou à une précision horizontale minimale HPL supérieure à un seuil d'alerte horizontal, noté HAL.

Ce signal d'alerte est émis dans un délai appelé temps de déclaration de panne, et noté TTA. Le temps de déclaration de panne TTA est par exemple égal à six secondes, lorsque le système GPS est dans son mode de fonctionnement optimal. Ainsi, un temps de déclaration de panne TTA donné, par exemple égal à six secondes, n'est garanti que dans ce mode de fonctionnement optimal.

Ce délai est égal à l'intervalle de temps qui s'écoule entre l'instant $t$ pour lequel une position de l'aéronef de précision dégradée est déterminée et l'instant, postérieur, auquel la dégradation de la précision est signalée.

Ainsi, des informations de position de l'aéronef à un instant $t$, issues du module 5 de positionnement, ne sont validées par ce module 5 de positionnement qu'après un intervalle de temps égal au temps de déclaration de panne, à un instant $t$+TTA.

Des informations de position de l'aéronef à un instant $t$ sont donc en attente de validation pendant l'intervalle de temps compris entre l'instant $t$ et l'instant $t$+TTA, et sont ensuite validées ou invalidées à l'instant $t$+TTA, en fonction de leur précision.

Notamment, si la précision verticale minimale VPL des données GPS à l'instant $t$ est supérieure au seuil d'alerte vertical VAL, et/ou si la précision horizontale minimale HPL des données GPS à l'instant $t$ devient supérieure au seuil d'alerte horizontale HAL, les données GPS à l'instant $t$ seront invalidées à l'instant $t$+TTA.

Selon l'invention, la localisation de l'aéronef à un instant donné peut être déterminée selon deux modes de calcul distincts.

Le module 7 de sélection est propre à sélectionner, en chaque instant, en fonction de la phase de vol de l'aéronef à cet instant, lequel de ces modes de calcul doit être appliqué.

Le choix de l'un ou de l'autre de ces modes dépend de la conformité du temps de déclaration de pannes TTA du module 5 de positionnement à une limite supérieure de temps de déclaration de pannes acceptable à cet instant.

Cette limite supérieure correspond à la durée maximale pendant laquelle on tolère qu'une localisation entachée d'une erreur supérieure à une limite prédéfinie soit donnée à l'utilisateur sans que celui-ci n'en soit averti.

Cette limite supérieure dépend généralement de la phase de vol de l'aéronef à l'instant considéré. En particulier, alors qu'en phase de croisière, un temps de déclaration de pannes égal à six secondes est acceptable, ce temps de déclaration de pannes s'avère trop important lors des phases de décollage, d'approche ou d'atterrissage.

Le module 7 de sélection est ainsi propre à déterminer, en chaque instant, en fonction de la phase de vol de l'aéronef, si le temps de déclaration de pannes à cet instant est acceptable ou si un temps de déclaration de pannes inférieur serait nécessaire, pour en déduire quel mode de calcul de la position de l'aéronef doit être adopté.

Si le temps de déclaration de pannes du module 5 de positionnement est trop élevé pour la phase de vol en cours, c'est-à-dire si ce temps de déclaration de pannes n'est pas acceptable, le module 7 de sélection est propre à déclencher la détermination de la localisation de l'aéronef sur la base d'un premier mode de calcul. La localisation de l'aéronef déterminée sur la base de ce premier mode sera appelée par la suite « première localisation » et notée $L_1(t)$.

Si au contraire le temps de déclaration de pannes du module 5 de positionnement est acceptable, le module 7 de sélection est propre à déclencher la détermination de la localisation de l'aéronef sur la base d'un deuxième mode de calcul. Cette localisation de l'aéronef sera appelée par la suite « deuxième localisation » et notée $L_2(t)$.

Le système 1 est propre à déterminer une localisation de l'aéronef en chaque instant à partir des données inertielles issues du calculateur 13 et des données GPS issues du module 5 de positionnement par satellites, en fonction du mode de calcul choisi par le module 7 de sélection.

Selon les premier et deuxième modes de calcul, la localisation de l'aéronef à l'instant $t$ est déterminée sur la base de données inertielles et de données GPS.

En effet, alors que les données inertielles sont précises à court terme mais dérivent au cours du temps, les données GPS sont davantage bruitées mais présentent une erreur bornée dans le temps.

Ainsi, la combinaison de ces deux types de données permet à la fois de corriger les erreurs des données inertielles à l'aide des données GPS, et de corriger les erreurs du module 5 de positionnement à l'aide des données inertielles.

Selon le premier mode de calcul, la première localisation $L_1(t_e)$ de l'aéronef est déterminée à un instant d'estimation $t_e$ donné sur la base des données inertielles à cet instant $t_e$, et d'une correction $C_1(t_e)$ déterminée à partir d'un écart $e(t_a)$ constaté, à un instant antérieur $t_a$, entre la position GPS $p_{GPS}(t_a)$ et la position inertielle $p_i(t_a)$.

L'instant antérieur $t_a$ est choisi tel que l'intervalle de temps entre cet instant antérieure $t_a$ et l'instant de détermination $t_e$ est au moins égal au temps de déclaration de pannes TTA($t_a \le t_e$ - TTA). Avantageusement, l'instant antérieur $t_a$ est choisi comme l'instant le plus proche de l'instant de détermination $t_e$ pour lequel les données GPS ont été validées.

Ainsi, la première localisation $L_1(t_e)$ est déterminée indépendamment de toutes données GPS qui n'auraient pas encore été validées par le module 5 de positionnement. La première localisation $L_1(t_e)$ de l'aéronef en l'instant $t_e$ n'est donc pas affectée par des erreurs des données GPS qui n'auraient été détectées que postérieurement, à l'instant $t_e$+TTA.

La première localisation $L_1(t_e)$ est déterminée par le module 9 de localisation, comme décrit ci-après.

Selon le deuxième mode de calcul, la deuxième localisation $L_2(t_e)$ de l'aéronef à un instant d'estimation $t_e$ est déterminée sur la base des données inertielles à cet instant $t_e$, et d'une correction $C_2(t_e)$ déterminée par hybridation à partir d'un écart $e(t_a)$ constaté à un instant $t_a$ immédiatement antérieur à l'instant $t_e$, tel que $t_e$ - $TTA$ < $t_a \le t_e$, entre des premières informations de position issues du calculateur 13 à l'instant $t_a$ et des deuxièmes informations de position issues du module 5 de positionnement à l'instant $t_a$.

Cette deuxième localisation $L_2(t_e)$ est donc déterminée en fonction de données GPS qui n'ont pas encore été validées par le module 5 de positionnement.

Cette deuxième localisation $L_2(t_e)$ est avantageusement déterminée au moyen d'un filtre de Kalman, qui reçoit en entrée l'écart $e(t_a)$ et fournit en sortie une correction $C_2(t_e)$.

Cette deuxième localisation est déterminée par la centrale 3 de navigation inertielle.

A cette fin, la centrale 3 de navigation inertielle comporte une unité 20 d'hybridation, un commutateur 22, et un comparateur 25.

Le comparateur 25, raccordé en entrée au calculateur 13 et au module 5, est propre à déterminer en chaque instant $t$ un écart $e(t)$ entre la position GPS $p_{GPS}(t)$ et la position inertielle $p_i(t)$ : $e(t) = p_{GPS}(t) - p_i(t)$.

L'unité 20 d'hybridation est raccordée en entrée au comparateur 25, et raccordée en sortie au calculateur 13 et aux capteurs 11.

L'unité 20 d'hybridation est raccordée au comparateur 25 par l'intermédiaire d'un commutateur 22 commutable entre une position fermée et une position ouverte, le module 7 de sélection étant propre à commander la fermeture ou l'ouverture du commutateur 22 en fonction du mode de calcul choisi.

Lorsque le module 7 de sélection choisit le deuxième mode de calcul à l'instant $t_e$, le commutateur 22 est en position fermée, de telle sorte que l'unité 20 d'hybridation reçoit en entrée l'écart $e(t_a)$ entre la position GPS $p_{GPS}(t_a)$ et la position inertielle $p_i(t_a)$ déterminé par le comparateur 25 à l'instant $t_a$ immédiatement antérieur à l'instant $t_e$. L'unité 20 d'hybridation est alors propre à fournir en sortie la correction $C_2(t_e)$, déterminée par exemple au moyen d'un filtre de Kalman.

Cette correction $C_2(t_e)$ comporte une estimation de biais des capteurs 11 et des données d'amélioration de position, à partir desquelles le calculateur 13 détermine une position inertielle $p_i(t)$ de l'aéronef.

Lorsque le module 7 de sélection choisit le premier mode de calcul à un instant $t_e$, le commutateur 22 est en position ouverte, de telle sorte que l'unité 20 d'hybridation ne reçoit pas en entrée l'écart $e(t)$ entre la position GPS $p_{GPS}(t)$ et la position inertielle $p_i(t)$ déterminé par le comparateur 25. Dès lors, les capteurs 11 et le calculateur 13 reçoivent de l'unité 20 d'hybridation des valeurs de corrections non mises à jour.

Le module 9 de localisation est propre à déterminer la première localisation $L_1(t_e)$ de l'aéronef à l'instant d'estimation $t_e$ à partir de la position inertielle $p_i(t_e)$ et d'un écart constaté à un instant antérieur $t_a$ entre la position GPS et la position inertielle, l'intervalle de temps entre cet instant antérieure $t_a$ et l'instant de détermination $t_e$ étant au moins égal au temps de déclaration de pannes TTA.

Le module 9 comprend à cette fin un comparateur 26, raccordé en entrée au calculateur 13 et au module 5, propre à déterminer en chaque instant $t$ un écart $e(t)$ entre la position GPS $p_{GPS}(t)$ et la position inertielle $p_i(t)$ : $e(t) = p_{GPS}(t) - p_i(t)$.

Le module 9 comprend par ailleurs un filtre 28, raccordé en entrée au comparateur 26, propre à filtrer le signal $e(t)$ issu du comparateur 26 pour en supprimer le bruit.

Le filtre 28 est raccordé en entrée à un échantillonneur 30 propre à échantillonner le signal filtré $E(t)$ issu du filtre 28 à une fréquence $f_{ech}=1/T_{ech}$ prédéterminée, pour fournir un signal d'écart échantillonné $E(kT_{ech})$. La fréquence d'échantillonnage $f_{ech}=1/T_{ech}$ est par exemple supérieure à 0,2Hz.

Comme décrit ci-après, l'écart constaté à un instant $t$ est destiné à être stocké par le module 9 pendant une durée de stockage au moins égale au temps de déclaration de pannes TTA, puis à être utilisé à un instant $t_e \geq t+TTA$ pour corriger la valeur de la position inertielle $p_i(t_e)$.

Le module 9 comprend ainsi une mémoire 32, propre à stocker chaque valeur du signal échantillonné $E(kT_{ech})$ pendant une durée au moins égale au temps de déclaration de pannes. L'échantillonnage du signal d'écart permet de minimiser la taille de la mémoire 32 nécessaire à ce stockage.

Le module 9 comprend en outre des moyens 34 de validation, raccordés en entrée à la mémoire 32 et au module 5 de positionnement par satellites, et raccordés en sortie à un sommateur 36.

Les moyens 34 de validation sont propres à recevoir du module 5 de positionnement par satellites, en chaque instant $kT_{ech}+TTA$, les limites de protection associées la position GPS $p_{GPS}(kT_{ech})$, et à comparer ces limites de protection aux seuils d'alerte vertical et horizontal.

Si les précisions verticale VPL et horizontale HPL minimales de la position GPS $p_{GPS}(kT_{ech})$ sont inférieures aux seuils d'alerte vertical VAL et horizontal HAL respectivement, et si le GPS fonctionne dans son mode optimal, garantissant la valeur du temps de déclaration de pannes, la position GPS $p_{GPS}(kT_{ech})$ à l'instant $kT_{ech}$ est validée, de telle sorte que les moyens 34 de validation transmettent au sommateur 36, à l'instant $kT_{ech}+TTA$, l'écart $E(kT_{ech})$ constaté à l'instant $kT_{ech}$ entre la position GPS et la position inertielle.

Ainsi, dans ce mode de réalisation, la correction $C_1(t_e)$ est égale à l'écart $E(kT_{ech})$.

Si au contraire la précision verticale VPL minimale et/ou si la précision horizontale minimale HPL est/sont inférieure(s) au(x) seuil(s) d'alerte vertical VAL et/ou horizontal HAL respectivement, et/ou si le GPS ne fonctionne pas dans son mode optimal, la position GPS $p_{GPS}(kT_{ech})$ à l'instant $kT_{ech}$ n'est pas validée, et les moyens 34 de validation ne transmettent pas au sommateur 36 l'écart $E(kT_{ech})$.

Le sommateur 36 est raccordé en entrée au calculateur 13 et aux moyens 34 de validation. Le sommateur 36 est propre à déterminer la première localisation $L_1(t_e)$ de l'aéronef à l'instant d'estimation $t_e$ à partir de la position inertielle $p_i(t_e)$ issue du calculateur 13 à cet instant $t_e$ et de la dernière valeur d'écart reçue des moyens 34 de validation, comme une somme de la position inertielle $p_i(t_e)$ et de la dernière valeur d'écart reçue des moyens 34 de validation.

Notamment, si la position GPS $p_{GPS}(kT_{ech})$ à l'instant $kT_{ech}$ est validée, pour tout instant d'estimation $t_e$ tel que $kT_{ech} + TTA \leq t_e < (k + 1)T_{ech} + TTA$, la première localisation est estimée comme : $L_1(t_e) = p_i(t_e)+E(kT_{ech})$.

Si au contraire la position GPS $p_{GPS}(kT_{ech})$ à l'instant $kT_{ech}$ est invalidée, pour tout instant d'estimation $t_e$ tel que $kT_{ech} + TTA \leq t_e < (k + 1)T_{ech} + TTA$, la première localisation est estimée comme : $L_1(t_e) = p_i(t_e) + E(k'T_{ech})$ où $k'<k$.

Ainsi, la première localisation est déterminée indépendamment de toute donnée GPS qui n'a pas encore été validée ou qui a été invalidée.

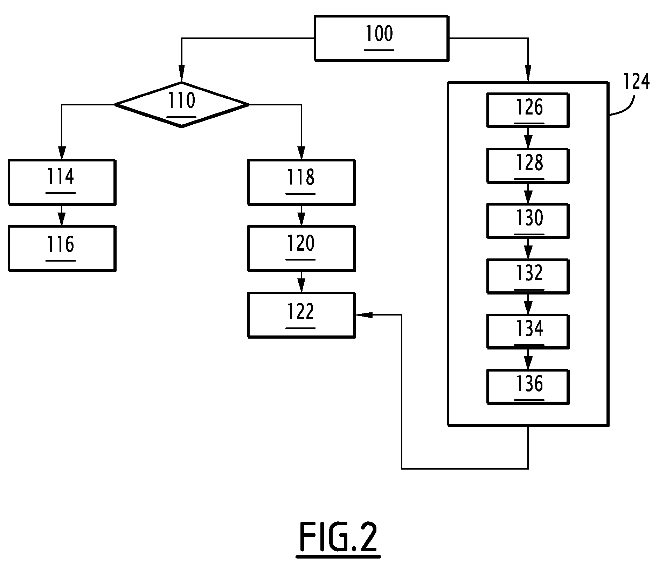

On a illustré sur la Figure 2 un exemple de mise en oeuvre du procédé selon l'invention, au moyen du système de la figure 1, pour l'estimation d'une localisation de l'aéronef à un instant $t_e$.

On considérera par la suite que cet instant $t_e$ est un instant d'échantillonnage tel que $t_e=nT_{ech}$.

Lors d'une étape 100 d'acquisition, la centrale 3 de navigation inertielle acquiert des données inertielles, et le module 5 de positionnement par satellites acquiert des données GPS, à l'instant $t_e$.

De plus, le module 5 de positionnement par satellites reçoit des signaux GPS et des signaux SBAS et en déduit la position GPS de l'aéronef $p_{GPS}(t_e)$ à l'instant $t_e$.

Par ailleurs, lors d'étape 110 de sélection, le module 7 de sélection choisit le mode de calcul devant être utilisé pour la détermination de la localisation de l'aéronef à l'instant $t_e$.

A cette fin, le module 7 de sélection détermine, en fonction de la phase de vol de l'aéronef à l'instant $t_e$, si le temps de déclaration de pannes est acceptable, ou si au contraire il est trop important compte tenu de cette phase de vol.

Si le temps de déclaration de pannes du module 5 de positionnement n'est pas acceptable, le module 7 de sélection choisit le premier mode de calcul.

Si au contraire le temps de déclaration de pannes du module 5 de positionnement est acceptable, le module 7 de sélection choisit le deuxième mode de calcul.

Puis, en fonction du mode de calcul choisi par le module 7 de sélection, la centrale 3 de navigation inertielle ou le module 9 de localisation détermine la localisation de l'aéronef à l'instant $t_e$ à partir des informations inertielles issues du calculateur 13 et des données GPS issues du module 5 de positionnement par satellites.

Si le deuxième mode de calcul est choisi, le module 7 de sélection commande lors d'une étape 114 la fermeture ou le maintien en position fermée du commutateur 22.

L'unité 20 d'hybridation reçoit alors en entrée l'écart $e(t_a)$ constaté à un instant $t_a$ immédiatement antérieur à l'instant $t_e$, tel que $t_e - TTA < t_a \leq t_e$, $t_e - TTA < t_a \leq t_e$, entre des premières informations de position issues du calculateur 13 et des deuxièmes informations de position issues du module 5 de positionnement, et détermine lors d'une étape 116, à partir de cet écart $e(t_a)$, une correction $C_2(t_e)$.

Cette correction est transmise aux capteurs 11 et au calculateur 13 qui estime, à partir des données inertielles et de la correction $C_2(t_e)$, la localisation $L_2(t_e)$ de l'aéronef.

Si le premier mode de calcul est choisi, le module 7 de sélection commande lors d'une étape 118 l'ouverture ou le maintien en position ouverte du commutateur 22.

L'unité 20 d'hybridation ne reçoit alors plus en entrée l'écart $e(t_a)$ entre les premières informations de position issues du calculateur 13 et les deuxièmes informations de position issues du module 5 de positionnement.

L'unité 20 d'hybridation ne met donc plus à jour la valeur de correction $C_2(t_e)$ à apporter aux données inertielles. Ainsi, le calculateur 13 détermine lors d'une étape 120, à partir des données inertielles et de la dernière valeur de correction $C_2(t_e)$ déterminée par l'unité 20 d'hybridation, la position inertielle de l'aéronef $p_i(t_e)$ à l'instant $t_e$.

Le module 9 détermine alors la première localisation $L_1(t_e)$ de l'aéronef à l'instant d'estimation $t_e$ lors d'une étape 122, à partir de la position inertielle $p_i(t_e)$ et d'un écart constaté à un instant antérieur $t_a$ entre la position GPS et la position inertielle, reçu des moyens 34 de validation.

Lors de l'étape 122, le sommateur 36 détermine la première localisation $L_1(t_e)$ de l'aéronef à l'instant d'estimation $t_e$ à partir de la position inertielle $p_i(t_e)$ issue de l'unité 20 d'hybridation à cet instant $t_e$ et de la dernière valeur d'écart reçue des moyens 34 de validation.

Cette dernière valeur d'écart est égale à :

- $E(kT_{ech})$, avec $kT_{ech} + TTA \leq t_e < (k + 1)T_{ech} + TTA$, si la position GPS $p_{GPS}(kT_{ech})$ à l'instant $kT_{ech}$ est validée ;
- $E(k'T_{ech})$, avec $k'<k$ et $k'T_{ech} + TTA < t_e$, si la position GPS $p_{GPS}(kT_{ech})$ à l'instant $kT_{ech}$ est invalidée, $k'T_{ech}$ étant l'instant le plus proche de $kT_{ech}$ dont la position GPS associée a été validée.

Ainsi, la première localisation $L_1(t_e)$ de l'aéronef est estimée comme :

$$L_1\left(t_e\right) = p_i\left(t_e\right) + E\left(kT_{ech}\right) \text{ ou } L_1\left(t_e\right) = p_i\left(t_e\right) + E\left(k'T_{ech}\right).$$

En parallèle, le module 9 stocke dans une étape 124 un écart constaté à l'instant $t_e$ entre la position GPS $p_{GPS}(t_e)$ et la position inertielle $p_i(t_e)$.

L'étape 124 comprend une phase 126 de détermination, par le comparateur 26, d'un écart $e(t_e) = p_{GPS}(t_e) - p_i(t_e)$ entre la position GPS $p_{GPS}(t_e)$ et la position inertielle $p_i(t_e)$.

La phase 126 est suivie d'une phase 128 de filtrage de l'écart $e(t_e)$ par le filtre 28 afin d'en supprimer au mieux le bruit, produisant un signal filtré $E(t_e)$.

Le signal filtré $E(t_e)$ est alors échantillonné par l'échantillonneur 30 lors d'une phase 130. Puisque l'instant $t_e$ considéré coïncide avec l'instant d'échantillonnage $nT_{ech}$, l'échantillonneur 30 fournit en sortie une valeur échantillonnée $E(nT_{ech}) = E(t_e)$.

Cette phase est suivie d'une phase 132 de stockage de la valeur $E(nT_{ech})$ par la mémoire 32. Cette phase de stockage a une durée au moins égale au temps de déclaration de pannes TTA.

Puis, lors d'une phase 134 de validation mise en oeuvre à l'instant $t_e$+TTA, les moyens 34 de validation reçoivent du module 5 de positionnement par satellites, les limites de protection associées à la position GPS $p_{GPS}(t_e)$, et comparent ces limites de protection aux seuils d'alerte vertical et horizontal.

Si les précisions verticale VPL et horizontale HPL minimales VPL de la position GPS $p_{GPS}(t_e)$ sont inférieures aux seuils d'alerte vertical VAL et horizontal HAL respectivement, et si le GPS est dans son mode de fonctionnement optimal, la position GPS $p_{GPS}(t_e)$ à l'instant $t_e$ est validée, et les moyens 34 de validation transmettent au sommateur 36, à l'instant $t_e$+TTA, l'écart $E(nT_{ech})$ constaté à l'instant $t_e$ entre la position GPS et la position inertielle, lors d'une phase 136.

Cet écart est alors utilisé par le sommateur 36 pour déterminer la première localisation $L_1(t_e$+TTA$)$ de l'aéronef à l'instant d'estimation $t_e$+TTA, conformément à l'étape 122.

Si au contraire la précision verticale VPL minimale et/ou si la précision horizontale minimale HPL est/sont inférieure(s) au(x) seuil(s) d'alerte vertical VAL et/ou horizontal HAL respectivement, et/ou si le GPS n'est pas dans son mode de fonctionnement optimal, la position GPS $p_{GPS}(t_e)$ à l'instant $t_e$ n'est pas validée, et les moyens 34 de validation ne transmettent pas au sommateur 36 l'écart $E(nT_{ech})$.

Le système et le procédé selon l'invention permettent ainsi, lorsqu'un temps de déclaration de pannes n'est pas acceptable, de déterminer une localisation de l'aéronef qui ne dépend pas de données GPS potentiellement entachées d'erreurs, mais néanmoins plus précise qu'une localisation qui serait déterminée à partir des seules données inertielles.

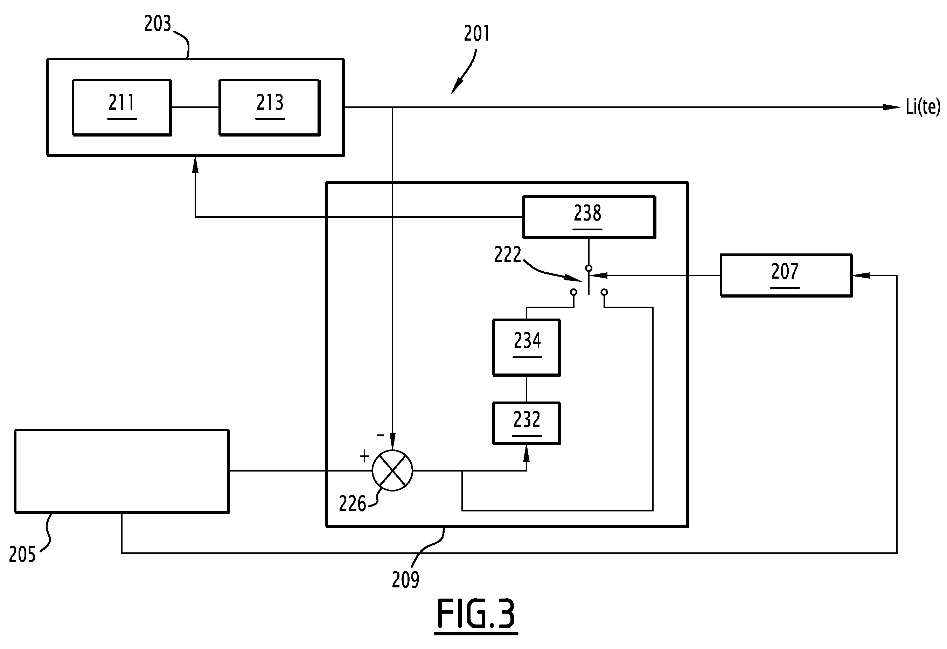

On a représenté sur la Figure 3 un système 201 selon un deuxième mode de réalisation de l'invention.

Le système 201 comporte un module 203 de navigation inertielle et un module 205 de positionnement par satellites.

Le système 201 comporte en outre un module 207 de sélection, similaire au module 7 de sélection du système 1, et un module 209 de correction.

Selon cet exemple, le module 203 de navigation inertielle, le module 205 de positionnement par satellites, le module 207 de sélection et le module 209 de correction sont intégrés à une centrale de navigation inertielle.

Le module 203 de navigation inertielle comprend des capteurs accélérométriques et gyrométriques 211 et un calculateur 213.

Le calculateur 213 est configuré pour déterminer, à partir de mesures accélérométriques et gyrométriques issues des capteurs 211, des premières informations de position géographique et de vitesse de l'aéronef.

En outre, le calculateur 213 est configuré pour déterminer une localisation de l'aéronef en un instant d'estimation $t_e$ à partir de ces premières informations de position et d'une correction apportée à ces informations. Cette correction, estimée à un instant $t$ à partir de la localisation $L_1(t)$ ou $L_2(t)$ estimée par le calculateur 213 à cet instant $t$ et des données GPS, est destinée à améliorer la précision de la localisation déterminée, par rapport à une localisation qui serait estimée à partir des seules données inertielles.

Le module 205 de navigation inertielle est similaire au module 5 de navigation inertielle décrit en référence à la Figure 1.

Le module 209 de correction est propre à déterminer une correction $C'_i$ à apporter aux données inertielles à partir d'une localisation $L_i$ estimée par le calculateur 213 et de données GPS issues du module 205 de positionnement par satellites. Cette correction $C'_i$ dépend du mode de calcul choisi par le module 207 de sélection.

Selon le premier mode de calcul, la première localisation $L_1(t_e)$ de l'aéronef est déterminée à un instant d'estimation $t_e$ sur la base des données inertielles à cet instant $t_e$, et d'une correction $C'_1(t_e)$ déterminée à partir d'un écart $e'(t_a)$ constaté, à un instant antérieur $t_a$, entre la position GPS $p_{GPS}(t_a)$ et la localisation $L_1(t_a)$ ou $L_2(t_a)$.

L'instant antérieur $t_a$ est choisi tel que l'intervalle de temps entre cet instant antérieur $t_a$ et l'instant de déter-

mination $t_e$ est au moins égal au temps de déclaration de pannes TTA($t_a \leq t_e$ - TTA). Avantageusement, l'instant antérieur $t_a$ est choisi comme l'instant le plus proche de l'instant de détermination $t_e$ pour lequel les données GPS ont été validées.

Ainsi, la première localisation L$_1$($t_e$) est déterminée indépendamment de toutes données GPS qui n'auraient pas encore été validées par le module 205 de positionnement. La première localisation L$_1$($t_e$) de l'aéronef en l'instant $t_e$ n'est donc pas affectée par des erreurs des données GPS qui n'auraient été détectées que postérieurement, à l'instant $t_e$+TTA.

Selon le deuxième mode de calcul, la deuxième localisation L$_2$($t_e$) de l'aéronef à un instant d'estimation $t_e$ est déterminée sur la base des données inertielles à cet instant $t_e$, et d'une correction C'$_2$($t_e$) déterminée à partir d'un écart $e'$($t_a$) constaté à un instant $t_a$ immédiatement antérieur à l'instant $t_e$, tel que $t_e$ - TTA < $t_a \leq t_e$.

Cette deuxième localisation $L_2$($t_e$) est donc déterminée en fonction de données GPS qui n'ont pas encore été validées par le module 205 de positionnement.

Par la suite, la localisation estimée par le calculateur 213 sera notée L$_i$, avec $i$=1 ou 2 en fonction du mode de calcul choisi.

Le module 209 de correction comprend un comparateur 226, raccordé en entrée au module 203 de navigation inertielle et au module 205 de positionnement par satellites, et propre à déterminer en chaque instant $t$ un écart e($t$) entre la position GPS p$_{GPS}$($t$) et la localisation L$_i$($t$) : $e'$($t$) = $p_{GPS}$($t$) - $L_i$($t$).

Le module 209 de correction comporte par ailleurs une mémoire 232, des moyens 234 de validation, un commutateur 222, et une unité 238 d'hybridation.

La mémoire 232, raccordée à une sortie du comparateur 226, est propre à stocker l'écart e'($t$) pendant une durée au moins égale au temps de déclaration de pannes TTA.

Les moyens 234 de validation sont raccordés en entrée à la mémoire 232 et au module 205 de positionnement par satellites.

Les moyens 234 de validation sont propres à recevoir du module 205 de positionnement par satellites, en chaque instant $t$+TTA, les limites de protection associées la position GPS p$_{GPS}$($t$), et à comparer ces limites de protection aux seuils d'alerte vertical et horizontal.

Si les précisions verticale VPL et horizontale HPL minimales VPL de la position GPS p$_{GPS}$($t$) sont inférieures aux seuils d'alerte vertical VAL et horizontal HAL respectivement, la position GPS p$_{GPS}$($t$) à l'instant $t$ est validée. Les moyens 234 de validation extraient alors de la mémoire 232 l'écart e'($t$) constaté à l'instant $t$ entre la position GPS et la position inertielle et transmettent cet écart, via le commutateur 222, à l'unité 238 d'hybridation.

Si au contraire la précision verticale VPL minimale et/ou si la précision horizontale minimale HPL est/sont inférieure(s) au(x) seuil(s) d'alerte vertical VAL et/ou horizontal HAL respectivement, la position GPS p$_{GPS}$($t$) à l'instant t n'est pas validée, et les moyens 234 de validation ne transmettent pas à l'unité 238 d'hybridation l'écart e'($t$).

Le commutateur 222 comprend deux bornes d'entrée raccordées respectivement aux moyens 234 de validation et à une sortie du comparateur 226, et une borne de sortie raccordée à une entrée de l'unité 238 d'hybridation. Le commutateur 222 peut être commuté entre une première et une deuxième position, sous le contrôle du module 207 de sélection, en fonction du mode de calcul choisi par le module 207.

Lorsque le module 207 de sélection choisit le premier mode de calcul à un instant d'estimation $t_e$, le commutateur 222 est commuté dans la première position, dans laquelle l'entrée de l'unité 238 d'hybridation est raccordée aux moyens 234 de validation. L'unité 238 d'hybridation reçoit alors en entrée une valeur d'écart e'($t_a$) constatée à un instant $t_a$ antérieur à l'instant $t_e$, tel que $t_a \leq t_e$ - TTA. Cet écart sera noté par la suite e'$_1$ ($t_a$).

Lorsque le module 207 de sélection choisit le deuxième mode de calcul, le commutateur 222 est commuté dans la deuxième position, dans laquelle l'entrée de l'unité 238 d'hybridation est raccordée à la sortie du comparateur 226. L'unité 238 d'hybridation reçoit alors en entrée une valeur d'écart $e'$($t_a$) constatée à un instant $t_a$ tel que $t_e$ - TTA < $t_a \leq t_e$. Cet écart sera noté par la suite e'$_2$ ($t_a$).

Par la suite, on notera e'$_i$ l'écart reçu par l'unité 238 d'hybridation, avec $i$=1 ou 2 en fonction du mode de calcul choisi.

L'unité 238 d'hybridation est propre à déterminer la valeur de la correction C$_i$($t_e$) à partir de l'écart e'$_i$($t_a$) reçu via le commutateur 222, par exemple au moyen d'un filtre de Kalman, et à transmettre la valeur de cette correction au calculateur 213.

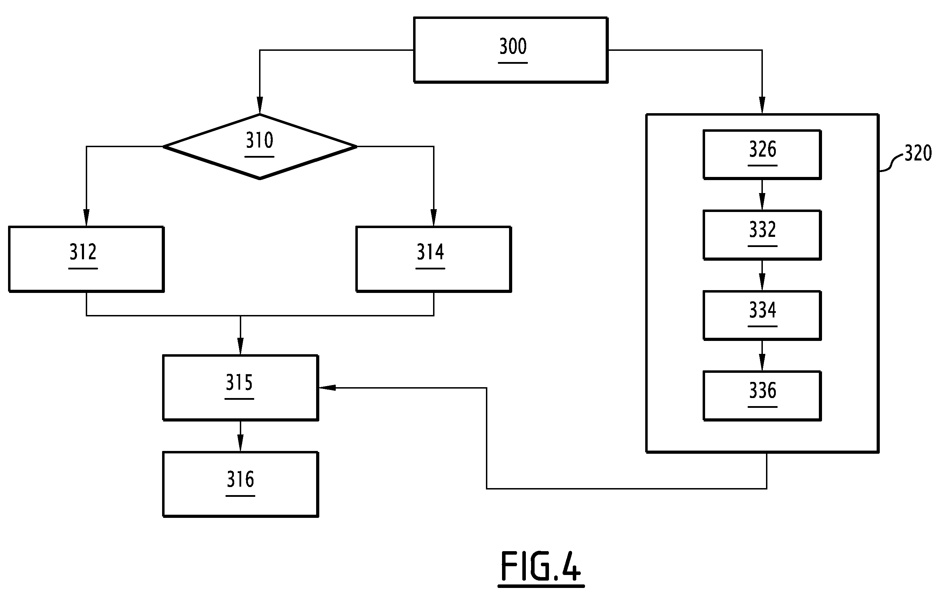

On a illustré sur la Figure 4 un deuxième exemple de mise en oeuvre du procédé selon l'invention, au moyen du système de la Figure 3, pour l'estimation d'une localisation de l'aéronef à un instant $t_e$.

Lors d'une étape 300 d'acquisition, similaire à l'étape 100 décrite en référence à la Figure 2, le module 203 de navigation inertielle acquiert des données inertielles, et le module 205 de positionnement par satellites acquiert des données GPS, à l'instant d'estimation $t_e$.

Par ailleurs, lors d'une étape 310 de sélection, similaire à l'étape 110 décrite en référence à la Figure 2, le module 207 de sélection choisit le mode de calcul devant être utilisé pour la détermination de la localisation de l'aéronef à l'instant $t_e$.

Si le premier mode de calcul est choisi, le module 207 de sélection commute lors d'une étape 312 le commutateur

8

222 dans la première position.

L'unité 238 d'hybridation est alors raccordée aux moyens 234 de validation, et reçoit alors en entrée une valeur d'écart $e'_1(t_a)$ constatée à un instant $t_a$ antérieur à l'instant $t_e$, tel que $t_a \leq t_e$ - TTA. Cette valeur d'écart $e'_1(t_a)$ est la dernière valeur d'écart transmise par les moyens 234 de validation.

Cette dernière valeur d'écart est égale à :

- $e'(t_e$ - TTA), si la position GPS $p_{GPS}(t_e$-TTA) à l'instant $t_e$-TTA est validée ;
- $e'(t_a)$, avec $t_a < te$ - TTA, si la position GPS $_{PGPS}(t_e$-TTA) à l'instant $t_e$-TTA est invalidée, $t_a$ étant l'instant le plus proche de $t_e$-TTA dont la position GPS associée a été validée.

Si le deuxième mode de calcul est choisi, le module 207 de sélection commute lors d'une étape 314 le commutateur 222 dans la deuxième position.

L'unité 238 d'hybridation est alors raccordée à la sortie du comparateur 226, et reçoit alors en entrée une valeur d'écart $e'_2(t_a)$ constatée à un instant $t_a$ immédiatement antérieur à l'instant $t_e$, tel que $t_e$ - TTA $< t_a \leq t_e$.

Lors d'une étape 315, l'unité 238 d'hybridation détermine à partir de la valeur d'écart $e'_i$ reçue lors de l'étape 312 ou 314 une valeur de correction $C'_i(t_e)$.

Puis, lors d'une étape 316, le calculateur 213 reçoit de l'unité 238 d'hybridation la valeur de correction $C'_i(t_e)$ ainsi déterminée, et estime, à partir des données inertielles et de la correction $C'_i(t_e)$, une localisation $L_i(t_e)$ de l'aéronef.

Si le premier mode de calcul est choisi, cette localisation $L_i(t_e) = (t_e)$ est déterminée à partir des données inertielles à l'instant $t_e$ et d'une correction $C'1(t_e)$ déterminée à partir d'un écart constaté entre une localisation et des données GPS validées, donc indépendamment de toutes données GPS qui n'auraient pas encore été validées par le module 205 de positionnement.

Selon le deuxième mode de calcul, la deuxième localisation $L_2(t_e)$ de l'aéronef à un instant d'estimation $t_e$ est déterminée sur la base des données inertielles à cet instant $t_e$, et d'une correction $C'_2(t_e)$ déterminée à partir d'un écart $e'(t_a)$ constaté à un instant $t_a$ immédiatement antérieur à l'instant $t_e$, tel que $t_e$ - TTA $< t_a \leq t_e$.

Cette deuxième localisation $L_2(t_e)$ est donc déterminée en fonction de données GPS qui n'ont pas encore été validées par le module 205 de positionnement.

En parallèle, le module 209 de correction stocke dans une étape 320 un écart $e'(t_e)$ constaté à l'instant $t_e$ entre la position GPS $p_{GPS}(t_e)$ et la localisation $L_i(t_e)$.

L'étape 320 comprend une phase 326 de détermination, par le comparateur 226, d'un écart $e'(t_e) = p_{GPS}(t_e)$ - $L_i(t_e)$ entre la position GPS $p_{GPS}(t_e)$ et la localisation $L_i(t_e)$.

Cette phase 326 est suivie d'une phase 332 de stockage de la valeur $e'(t_e)$ par la mémoire 232, pendant une durée au moins égale au temps de déclaration de pannes TTA.

Puis, lors d'une phase 334 de validation mise en oeuvre à l'instant $t_e$+TTA, les moyens 234 de validation reçoivent du module 205 de positionnement par satellites les limites de protection associées à la position GPS $p_{GPS}(t_e)$, et comparent ces limites de protection aux seuils d'alerte vertical et horizontal.

Si les précisions verticale VPL et horizontale HPL minimales VPL de la position GPS $p_{GPS}(t_e)$ sont inférieures aux seuils d'alerte vertical VAL et horizontal HAL respectivement, la position GPS $p_{GPS}(t_e)$ à l'instant $t_e$ est validée, et les moyens 234 de validation extraient alors de la mémoire 232 l'écart $e'(t_e)$ constaté à l'instant $t_e$ et transmettent cet écart, vers le commutateur 222, à destination de l'unité 238 d'hybridation, lors d'une phase 336.

Cet écart $e'(t_e)$ est alors utilisé par l'unité 238 d'hybridation pour déterminer à partir une nouvelle valeur de correction, conformément à l'étape 315.

Si au contraire la précision verticale VPL minimale et/ou si la précision horizontale minimale HPL est/sont inférieure(s) au(x) seuil(s) d'alerte vertical VAL et/ou horizontal HAL respectivement, la position GPS $p_{GPS}(t_e)$ à l'instant $t_e$ n'est pas validée, et les moyens 234 de validation ne transmettent pas au commutateur 222 l'écart $e'(t_e)$.

Il devra être compris que les exemples de réalisation présentés ci-dessus ne sont pas limitatifs.

Notamment, selon une variante du système selon le premier mode de réalisation, le système 1 comprend plusieurs modules de navigation inertielle redondants, chacune propre à fournir des données inertielles. Ces données inertielles peuvent être consolidées pour fournir des données inertielles consolidées à partir desquelles le module 9 de localisation détermine la localisation de l'aéronef.

Alternativement, le module 9 de localisation détermine une localisation de l'aéronef à partir des données inertielles issue de chaque module de navigation inertielle, et les localisations ainsi déterminées sont consolidées pour fournir une localisation de l'aéronef.

En outre, le module 5 de positionnement peut être différent d'un module GPS/SBAS, par exemple un GPS standard ou couplé à un système d'augmentation de type GBAS (pour « Ground Based Augmentation System »).

Bien entendu, d'autres modes de réalisation peuvent être envisagés, et les caractéristiques techniques des modes de réalisation et variantes mentionnées ci-dessus peuvent être combinées entre elles.

**Revendications**

1. Système d'aide (1; 201) à la navigation destiné à être embarqué dans un aéronef, comprenant :

   - un module (3 ; 203) de navigation inertielle, propre à fournir des premières informations de position de l'aéronef résultant au moins en partie de mesures accélérométriques et gyrométriques,
   - un module (5; 205) de positionnement par satellites, comprenant au moins un récepteur de données de navigation satellitaire, ledit module (5; 205) de positionnement étant propre à déterminer des deuxièmes informations de position de l'aéronef à partir de données de positionnement par satellites reçues par ledit récepteur de données de navigation satellitaire,
   ledit système (1; 201) comprenant des moyens d'estimation (3, 9 ; 203, 209) propres à estimer une première localisation ($L_1$) de l'aéronef en un instant d'estimation ($t_e$) donné sur la base :

   - de premières informations de position de l'aéronef, résultant au moins en partie de mesures accélérométriques et gyrométriques audit instant d'estimation ($t_e$), et
   - de deuxièmes informations de position de l'aéronef, déterminées à partir de données de positionnement par satellites reçues par ledit récepteur de données de navigation satellitaire antérieurement audit instant d'estimation ($t_e$),
   ladite première localisation étant déterminée indépendamment de toutes données de positionnement par satellites reçues dans un intervalle de temps prédéterminé (TTA) précédant ledit instant d'estimation ($t_e$) et incluant ledit instant d'estimation ($t_e$), ledit intervalle de temps prédéterminé étant égal à un temps de déclaration de panne (TTA),
   ledit module (5; 205) de positionnement par satellites comprenant des moyens pour valider ou invalider lesdites données de positionnement par satellites, en fonction d'une précision desdites données de positionnement par satellites et/ou en fonction d'un mode de fonctionnement dudit module (5; 205) de positionnement par satellites,
   ledit système étant **caractérisé**
   **en ce que** les deuxièmes informations de position de l'aéronef comprennent une estimation d'une position ($p_{GPS}$) de l'aéronef en au moins un instant de détermination ($t_a$) donné et une estimation d'une précision (VPL, HPL) de ladite position ($p_{GPS}$), déterminées à partir de données de positionnement par satellites, et en ce que ledit module (5; 205) de positionnement par satellites est propre à comparer l'estimation de la précision (VPL, HPL) de ladite position ($p_{GPS}$) à une précision minimale requise (VAL, HAL) audit instant de détermination ($t_a$), et à valider lesdites données de positionnement par satellites, en un instant de validation ($t_a$+TTA) postérieur audit instant de détermination ($t_a$), si l'estimation de la précision (VPL, HPL) de ladite position ($p_{GPS}$) est conforme à ladite précision minimale requise (VAL, HAL), l'écart entre ledit instant de détermination ($t_a$) et ledit instant de validation ($t_a$+TTA) étant inférieur ou égal audit temps de déclaration de panne (TTA).

2. Système d'aide (1; 201) à la navigation selon la revendication 1, **caractérisé en ce que** ladite première localisation ($L_1$) est déterminée indépendamment de toutes données de positionnement par satellites qui n'auraient pas été validées par ledit module (5; 205) de positionnement par satellites.

3. Système d'aide (1) à la navigation selon l'une quelconque des revendications 1 ou 2, **caractérisé en ce qu'**il comporte une unité de stockage (32) d'un écart ($e$) constaté en un instant antérieur ($t_a$) entre des premières informations de position de l'aéronef et des deuxièmes informations de position de l'aéronef, propre à stocker ledit écart ($e$) au moins entre ledit instant antérieur ($t_a$) et ledit instant d'estimation ($t_e$),
   et **en ce que** lesdits moyens d'estimation (9) sont propres à déterminer ladite première localisation ($L_1$) de l'aéronef audit instant d'estimation ($t_e$) :

   - en fonction de l'écart constaté ($e$) audit instant antérieur ($t_a$) si lesdites données de positionnement par satellites audit instant antérieur ($t_a$) sont validées, ou
   - en fonction d'un écart constaté ($e$) au dernier instant pour lequel des données de positionnement par satellites ont été validées, si lesdites données de positionnement par satellites audit instant antérieur ($t_a$) ne sont pas validées.

4. Système d'aide (201) à la navigation selon l'une quelconque des revendications 1 ou 2, **caractérisé en ce qu'**il comporte une unité de stockage (232) d'un écart ($e'$) constaté en un instant antérieur ($t_a$) entre des deuxièmes informations de position de l'aéronef et une première localisation ($L_1$) déterminée audit instant antérieur ($t_a$) par

lesdits moyens d'estimation (203, 209), ladite unité de stockage (232) étant propre à propre à stocker ledit écart ($e'$) au moins entre ledit instant antérieur ($t_a$) et ledit instant d'estimation ($t_e$),
et **en ce que** lesdits moyens d'estimation (203, 209) sont propres à déterminer ladite première localisation ($L_1$) de l'aéronef audit instant d'estimation ($t_e$) :

- en fonction de l'écart constaté ($e'$) audit instant antérieur ($t_a$) si lesdites données de positionnement par satellites audit instant antérieur ($t_a$) sont validées, ou
- en fonction d'un écart constaté ($e'$) au dernier instant pour lequel des données de positionnement par satellites ont été validées, si lesdites données de positionnement par satellites audit instant antérieur ($t_a$) ne sont pas validées.

5. Système d'aide (1 ; 201) à la navigation selon l'une quelconque des revendications précédentes, **caractérisé en ce que** lesdits moyens d'estimation (3, 9 ; 203, 209) sont propres à déterminer une deuxième localisation ($L_2$) de l'aéronef en un instant d'estimation ($t_e$), sur la base d'une hybridation entre :

- des premières informations de position ($p_i$) de l'aéronef résultant au moins en partie de mesures accélérométriques et gyrométriques audit instant d'estimation ($t_e$), et
- des deuxièmes informations de position ($p_{GPS}$) de l'aéronef déterminées à partir de signaux de positionnement par satellites reçus par ledit récepteur de données de navigation satellitaire audit instant d'estimation ($t_e$).

6. Système d'aide (1 ; 201) à la navigation selon la revendication 5, **caractérisé en ce qu'**il comporte un module de sélection (7) propre à déterminer une localisation fiabilisée ($L_i$) de l'aéronef, en un instant d'estimation ($t_e$) associé à une exigence de réactivité prédéterminée, ladite localisation fiabilisée ($L_i$) étant :

- égale à ladite première localisation ($L_1$) si ledit temps de déclaration de panne (TTA) n'est pas conforme à ladite exigence de réactivité,
- égale à ladite deuxième localisation ($L_2$) si ledit temps de déclaration de panne (TTA) est conforme à ladite exigence de réactivité.

7. Système d'aide (1 ; 201) à la navigation selon l'une quelconque des revendications précédentes, **caractérisé en ce que** ledit module de positionnement par satellites (5 ; 205) comprend des moyens de réception de signaux de positionnement différentiel et de signaux issus d'un système d'augmentation de la précision du positionnement du type Space Based Augmentation System (SBAS).

8. Système d'aide (1 ; 201) à la navigation selon l'une quelconque des revendications précédentes, **caractérisé en ce que** ladite première localisation ($L_1$) de l'aéronef est estimée sur la base d'une hybridation entre lesdites premières informations de position ($p_i$) de l'aéronef et lesdites deuxièmes informations de position ($p_{GPS}$) de l'aéronef.

9. Procédé d'aide à la navigation d'un aéronef, comprenant, dans au moins une première phase de vol de l'aéronef, une étape d'estimation d'une première localisation de l'aéronef en un instant d'estimation ($t_e$) donné comprenant :

- une phase de détermination (100 ; 300) de premières informations de position ($p_i$) de l'aéronef, résultant au moins en partie de mesures accélérométriques et gyrométriques d'une centrale de navigation inertielle audit instant d'estimation ($t_e$),
- une phase de détermination (100 ; 300) de deuxièmes informations de position ($p_{GPS}$) de l'aéronef, à partir de données de positionnement par satellites reçues par un récepteur de données de navigation satellitaire antérieurement audit instant d'estimation ($t_e$),
- une phase d'estimation (122 ; 316) de ladite première localisation ($L_1$) de l'aéronef sur la base desdites premières ($p_i$) et deuxièmes ($p_{GPS}$) informations de position, ladite première localisation ($L_1$) étant estimée indépendamment de toute donnée de positionnement par satellites reçue dans un intervalle de temps prédéterminé (TTA) précédant ledit instant d'estimation ($t_e$) et incluant ledit instant d'estimation ($t_e$), ledit intervalle de temps prédéterminé étant égal à un temps de déclaration de panne (TTA),
comprenant
une étape de validation (134 ; 334) desdites données de positionnement par satellites, en fonction d'une précision desdites données de positionnement par satellites et/ou en fonction d'un mode de fonctionnement dudit module (5 ; 205) de positionnement par satellites,
ledit procédé étant **caractérisé**
**en ce que** la phase de détermination (100) de deuxièmes informations de position comprend une estimation d'une position ($p_{GPS}$) de l'aéronef en au moins un instant de détermination ($t_a$) donné et une estimation d'une précision (VPL, HPL) de ladite position ($p_{GPS}$), à partir desdites données de positionnement par satellites, et en ce que ladite étape de validation comprend une phase de comparaison de l'estimation de la précision (VPL, HPL) de ladite position ($p_{GPS}$) à une précision minimale requise (VAL, HAL) audit instant de détermination ($t_a$), lesdites données de positionnement par satellites étant validées, en un instant de validation ($t_a$+TTA) postérieur audit instant de détermination ($t_a$), si et seulement si l'estimation de la précision (VPL, HPL) de ladite position ($p_{GPS}$) est conforme à ladite précision minimale requise (VAL, HAL), l'écart entre ledit instant de détermination ($t_a$) et ledit instant de validation ($t_a$+TTA) étant inférieur ou égal audit temps de déclaration de panne (TTA).

10. Procédé selon la revendication 9, **caractérisé en ce que** ladite première localisation ($L_1$) est déterminée indépendamment de toutes données de positionnement par satellites qui n'auraient pas été validées.

11. Procédé selon l'une quelconque des revendications 9 ou 10, **caractérisé en ce qu'**il comprend, dans au moins une deuxième phase de vol de l'aéronef, une étape d'estimation d'une deuxième localisation *($L_2$)* de l'aéronef en un instant d'estimation *($t_e$)*, sur la base d'une hybridation entre :

- des premières informations de position ($p_i$) de l'aéronef résultant au moins en partie de mesures accélérométriques et gyrométriques audit instant d'estimation ($t_e$), et
- des deuxièmes informations de position ($p_{GPS}$) de l'aéronef déterminées à partir de signaux de positionnement par satellites reçus par ledit récepteur de données de navigation satellitaire audit instant d'estimation ($t_e$).

**Patentansprüche**

1. Navigationssystem (1; 201), welches dafür bestimmt ist, an Bord eines Flugzeugs gebracht zu werden, aufweisend:

- ein Modul (3; 203) zur Trägheitsnavigation, welches geeignet ist, erste Informationen über die Position des Flugzeugs zu liefern, welche mindestens teilweise aus Beschleunigungs- und gyrometrischen Messungen resultieren,
- ein Modul (5; 205) zur Positionsbestimmung mittels Satelliten, welches mindestens einen Satellitennavigationsdatenempfänger aufweist, wobei das Modul (5; 205) zur Positionsbestimmung eingerichtet ist, zweite Informationen über die Position des Flugzeugs ausgehend von durch den Satellitennavigationsdatenempfänger empfangenen Daten zur Positionsbestimmung mittels Satelliten zu bestimmen,
wobei das System (1; 201) Mittel zum Schätzen (3, 9; 203, 209) aufweist, welche eingerichtet sind, eine erste Position ($L_1$) des Flugzeugs zu einem Schätzungsszeitpunkt ($t_e$) zu schätzen, welcher basiert auf:
- ersten Informationen über die Position des Flugzeugs, welche mindestens aus Beschleunigungs- und gyrometrischen Messungen zu diesem Bestimmungszeitpunkt ($t_e$) resultieren, und
- zweiten Informationen über die Position des Flugzeugs, bestimmt ausgehend von durch den Satellitennavigationsdatenempfänger empfangenen Daten zur Positionsbestimmung mittels Satelliten vor dem Bestimmungszeitpunkt ($t_e$),
wobei die erste Position unabhängig von jeglichen innerhalb eines vorbestimmten Zeitintervalls (TTA) vor dem Schätzungszeitpunkt ($t_e$) bis zu einschließlich dem Schätzungszeitpunkt ($t_e$) empfangenen Daten zur Positionsbestimmung mittels Satelliten bestimmt wird, wobei das vorbestimmte Zeitintervall gleich einer Zeit einer Fehlermeldung (TTA) ist,
wobei das Modul (5; 205) zur Positionsbestimmung mittels Satelliten Mittel zum Validieren oder zum Invalidieren der Daten zur Positionsbestimmung mittels Satelliten in Anhängigkeit von einer Genauigkeit der Daten zur Positionsbestimmung mittels Satelliten und/oder in Abhängigkeit von einer Funktionsweise des Moduls (5; 205) zur Positionsbestimmung mittels Satelliten aufweist, wobei das System **dadurch gekennzeichnet ist, dass** die zweiten Informationen über die Position des Flugzeugs eine Schätzung einer Position ($p_{gps}$) des Flugzeugs zu mindestens einem bestimmten Bestimmungszeitpunkt ($t_a$) und eine Schätzung einer Genauigkeit (VPL, HPL) der Position ($p_{gps}$), bestimmt ausgehend von Daten zur Positionsbestimmung mittels Satelliten aufweisen, und dass das Modul (5; 205) zur Positionsbestimmung mittels Satelliten eingerichtet ist, die Schätzung der Genauigkeit (VPL, HPL) mit einer erforderlichen minimalen Genauigkeit (VAL, HAL) zu dem Bestimmungszeitpunkt ($t_a$) zu vergleichen und die Daten zur Positionsbestimmung mittels Satelliten zu einem späterem Validirungszeitpunkt ($t_a$+TTA) als dem Bestimmungszeitpunkt ($t_a$) zu validieren, wenn die Schätzung der Genauigkeit (VPL, HPL) der Position ($p_{gps}$) konform mit der erforderlichen minimalen Genauigkeit (VAL, HAL) ist, wobei die Abweichung zwischen dem Bestimmungszeitpunkt ($t_a$) und dem Validierungszeitpunkt ($t_a$+TTA) weniger als oder gleich der Zeit der Fehlermeldung (TTA) ist.

2. Navigationssystem (1; 201) nach Anspruch 1, **dadurch gekennzeichnet, dass** die erste Position ($L_1$) unabhängig von allen Daten zur Positionsbestimmung mittels Satelliten bestimmt wird, welche von dem Modul (5; 205) zur Positionsbestimmung mittels Satelliten nicht validiert worden wären.

3. Navigationssystem (1; 201) nach einem der Ansprüche 1 oder 2, **dadurch gekennzeichnet, dass** es eine Einheit zum Speichern (32) einer Abweichung ($e$), festgestellt zu einem früheren Zeitpunkt ($t_a$) zwischen ersten Informationen über die Position des Flugzeugs und zweiten Informationen über die Position des Flugzeugs aufweist, welche eingerichtet ist, die Abweichung ($e$) mindestens zwischen dem früheren Zeitpunkt ($t_a$) und dem Schätzungszeitpunkt ($t_e$) zu speichern,
und dass die Mittel zum Schätzen (9) eingerichtet sind, die erste Position ($L_1$) zu dem Schätzungszeitpunkt ($t_e$) zu bestimmen:

- in Abhängigkeit von der festgestellten Abweichung ($e$) zu dem früheren Zeitpunkt ($t_a$), wenn die Daten zur Positionsbestimmung mittels Satelliten zu dem früheren Zeitpunkt ($t_a$) validiert wurden, oder
- in Abhängigkeit von einer Abweichung ($e$) festgestellt zu dem letzten Zeitpunkt die Daten zur Positionsbestimmung mittels Satelliten validiert wurden, wenn die Daten zur Positionsbestimmung mittels Satelliten zu dem früheren Zeitpunkt ($t_a$) nicht validiert wurden.

4. Navigationssystem (1; 201) nach einem der Ansprüche 1 oder 2, **dadurch gekennzeichnet, dass** es eine Einheit zum Speichern (232) einer Abweichung ($e'$) festgestellt zu einem früheren Zeitpunkt ($t_a$) zwischen zweiten Informationen über die Position des Flugzeugs und eine zu dem früheren Zeitpunkt ($t_a$) durch die Mittel zum Schätzen (203, 209) bestimmte erste Position ($L_1$) aufweist, wobei die Einheit zum Speichern (232) eingerichtet ist, die Abweichung ($e'$) mindestens zwischen dem früheren Zeitpunkt ($t_a$) und dem Schätzungszeitpunkt ($t_e$) zu speichern,
und dass die Mittel zum Schätzen (203, 209) eingerichtet sind, die erste Position ($L_1$) des Flugzeugs zu dem Schätzungszeitpunkt ($t_e$) zu bestimmen:

- in Abhängigkeit von der festgestellten Abweichung ($e'$) zu dem früheren Zeitpunkt ($t_a$), wenn die Daten zur Positionsbestimmung mittels Satelliten zu dem früheren Zeitpunkt ($t_a$) validiert wurden, oder
- in Abhängigkeit von einer Abweichung ($e'$), welche zu dem letzten Zeitpunkt festgestellt wird, zu dem die Daten zur Positionsbestimmung mittels Satelliten validiert wurden, wenn die Daten zur Positionsbestimmung mittels Satelliten zu dem früheren Zeitpunkt ($t_a$) nicht validiert wurden.

5. Navigationssystem (1; 201) nach einem der vorhergehenden Ansprüche, **dadurch gekennzeichnet, dass** die Mittel zum Schätzen (3, 9; 203, 209) eingerichtet sind, eine zweite Position ($L_2$) des Flugzeugs zu einem Schätzungszeitpunkt ($t_e$) zu bestimmen, auf der Basis einer Kombination zwischen:

- ersten Positionsdaten ($p_i$) des Flugzeugs, welche mindestens teilweise aus Beschleunigungs- und gyrometrischen Messungen zu dem Schätzungszeitpunkt ($t_e$) resultieren, und
- zweiten Positionsdaten ($p_{GPS}$) des Flugzeugs, welche aus durch den Satellitennavigationsdatenempfänger empfangenen Signalen zur Positionsbestimmung mittels Satelliten zu dem Schätzungszeitpunkt ($t_e$) bestimmt werden.

6. Navigationssystem (1; 201) nach Anspruch 5, **dadurch gekennzeichnet, dass** es ein Auswahlmodul aufweist, welches eingerichtet ist, die zuverlässige Position ($L_i$) des Flugzeugs zu einem Schätzungszeitpunkt ($t_e$) zu bestimmen, welcher einer vorbestimmten Anforderung an Reaktionsfähigkeit zugeordnet ist, wobei die zuverlässige Position:

- gleich der ersten Position ($L_1$) ist, wenn die Zeit der Fehlermeldung (TTA) nicht konform mit der Anforderung an Reaktionsfähigkeit ist,
- gleich der zweiten Position ($L_2$) ist, wenn die Zeit der Fehlermeldung (TTA) konform mit der Anforderung an Reaktionsfähigkeit ist.

7. Navigationssystem (1; 201) nach einem der vorhergehenden Ansprüche, **dadurch gekennzeichnet, dass** das Modul zur Positionsbestimmung mittels (5; 205) Mittel zum Empfangen von differentiellen Positionssignalen und von Signalen aufweist, welche aus einem System zur Erhöhung der Genauigkeit des Positionierens des Typs Space Based Augmentation System (SBAS) abgegeben wurden.

8. Navigationssystem (1; 201) nach einem der vorhergehenden Ansprüche, **dadurch gekennzeichnet, dass** die erste

**EP 2 765 390 B1**

Position ($L_1$) des Flugzeugs auf Basis einer Kombination zwischen den ersten Positionsdaten ($p_i$) des Flugzeugs und den zweiten Positionsdaten ($p_{GPS}$) des Flugzeugs geschätzt wird.

9. Verfahren für ein Navigationssystem eines Flugzeugs aufweisend:

in einer ersten Phase des Fluges des Flugzeugs, einen ersten Schritt zum Schätzen einer ersten Position des Flugzeugs zu einem gegebenen Schätzungszeitpunkt ($t_e$) aufweisend:

- eine Phase des Bestimmens (100; 300) von ersten Daten zur Positionsbestimmung ($p_i$) des Flugzeugs, welche mindestens teilweise aus Beschleunigungs- und gyrometrischen Messungen eines Trägheits-Navigationssystems zu dem Schätzungszeitpunkt ($t_e$) resultieren,
- eine Phase des Bestimmens (100; 300) von zweiten Daten zur Positionsbestimmung ($p_{GPS}$) des Flugzeugs aus durch einen Satellitennavigationsdatenempfänger empfangenen Signalen zur Positionsbestimmung mittels Satelliten vor dem Schätzungszeitpunkt ($t_e$),
- eine Phase des Schätzens (122; 316) der ersten Position ($L_1$) des Flugzeugs auf Basis der ersten ($p_i$) und den zweiten Daten zur Positionsbestimmung ($p_{GPS}$), wobei die erste Position unabhängig von jeglichen innerhalb eines vorbestimmten Zeitintervalls (TTA) vor dem Schätzungszeitpunkt ($t_e$) bis zu einschließlich dem Schätzungszeitpunkt ($t_e$) empfangenen Daten zur Positionsbestimmung mittels Satelliten geschätzt wird, wobei das vorbestimmte Zeitintervall gleich einer Zeit der Fehlermeldung (TTA) ist,

aufweisend einen Schritt des Validierens (134; 334) der Daten zur Positionsbestimmung mittels Satelliten in Abhängigkeit von einer Genauigkeit der Daten zur Positionsbestimmung mittels Satelliten und/oder in Abhängigkeit von einer Funktionsweise des Moduls (5; 205) zur Positionsbestimmung mittels Satelliten, wobei das Verfahren **dadurch gekennzeichnet ist, dass** die Bestimmungsphase (100) von zweiten Positionsdaten eine Schätzung einer Position ($p_{GPS}$) des Flugzeugs zu mindestens einem bestimmten Bestimmungszeitpunkt ($t_a$) und eine Schätzung einer Genauigkeit (VPL, HPL) der Position ($p_{GPS}$) aus den Daten zur Positionsbestimmung mittels Satelliten aufweist, und dass der Schritt des Validierens eine Phase des Vergleichens des Schätzens der Genauigkeit (VPL, HPL) der Position ($p_{GPS}$) mit einer erforderlichen minimalen Genauigkeit (VAL, HAL) zu dem Bestimmungszeitpunkt ($t_a$) aufweist, wobei die Daten zur Positionsbestimmung mittels Satelliten zu einem späterem Validierungszeitpunkt ($t_a$+TTA) als dem Bestimmungszeitpunkt ($t_a$) validiert werden, wenn und nur wenn die Schätzung der Genauigkeit (VPL, HPL) der Position ($p_{GPS}$) konform mit der erforderlichen minimalen Genauigkeit (VAL, HAL) ist, wobei die Abweichung zwischen dem Bestimmungszeitpunkt ($t_a$) und dem Validierungszeitpunkt ($t_a$+TTA) weniger als oder gleich der Zeit der Fehlermeldung (TTA) ist.

10. Verfahren nach Anspruch 9, **dadurch gekennzeichnet, dass** die erste Position ($L_1$) unabhängig von jeglichen Daten zur Positionsbestimmung mittels Satelliten bestimmt wird, welche nicht validiert wurden.

11. Verfahren nach einem der Ansprüche 9 oder 10, **dadurch gekennzeichnet, dass** es in mindestens einer zweiten Phase des Fluges des Flugzeugs einen Schritt des Schätzens einer zweiten Position ($L_1$) des Flugzeugs zu einem Schätzungszeitpunkt ($t_e$) aufweist, auf Basis einer Kombination zwischen:

- ersten Positionsdaten ($p_i$) des Flugzeugs, welche mindestens teilweise aus Beschleunigungs- und gyrometrischen Messungen zu dem Schätzungszeitpunkt ($t_e$) resultieren, und
- zweiten Positionsdaten ($p_{GPS}$) des Flugzeugs aus durch den Satellitennavigationsdatenempfänger zu dem Schätzungszeitpunkt ($t_e$) empfangenen Positionssignalen von Satelliten.

**Claims**

1. A navigation assistance system (1; 201) to be used on board an aircraft, comprising:

- an inertial navigation module (3; 203), adapted for providing first aircraft positional information resulting at least partially from accelerometric and gyrometric measurements,
- a satellite positioning module (5; 205), comprising at least one satellite navigation data receiver, said positioning module (5; 205) being adapted for determining second aircraft positional information from satellite positioning data received by said satellite navigation data receiver,
said system comprising estimation means (3,9 ; 203, 209) adapted for estimating a first localization ($L_1$) of the aircraft at a given time of estimation ($t_e$) on the basis of:

- first aircraft positional information, resulting at least partially from accelerometric and gyrometric measurements at said time of estimation ($t_e$), and

- second aircraft positional information, determined from satellite positioning data received by said satellite navigation data receiver prior to said time of estimation ($t_e$), said first localization being determined independently from any satellite positioning data received in a predetermined time interval (TTA) preceding said time of estimation ($t_e$) and including said time of estimation ($t_e$), said predetermined time interval being equal to a time to alert (TTA), said satellite positioning module (5; 205) comprising means for validating or invalidating said satellite positioning data, depending on the precision of said satellite positioning data and/or depending on the operating mode of said satellite positioning module (5; 205), the system being **characterized in that** the second aircraft positional information includes an estimate of a position ($p_{GPS}$) of the aircraft at least at a given time of determination ($t_e$) and an estimate of a precision (VPL, HPL) of said position ($p_{GPS}$), determined from satellite positioning data, and **in that** said satellite positioning module (5; 205) is adapted for comparing the estimate of the precision (VPL, HPL) of said position ($p_{GPS}$) to a required minimum precision (VAL, HAL) at said time of determination ($t_e$), and validating said satellite positioning data, at a validation time ($t_e$+TTA) after said time of determination ($t_e$), if the estimate of the precision (VPL, HPL) of said position ($p_{GPS}$) is in accordance with said required minimum precision (VAL, HAL), the time interval between said time of determination ($t_e$) and said validation time ($t_e$+TTA) being less or equal to said time to alert (TTA).

2. The navigation assistance system (1; 201) according to claim 1, **characterized in that** said first localization ($L_1$) is determined independently from any satellite positioning data which has not been validated by said satellite positioning module (5; 205).

3. The navigation assistance system (1) according to any of claims 1 or 2, **characterized in that** it comprises a unit (32) for storing a deviation (e) recorded at an earlier time ($t_a$) between first aircraft positional information and second aircraft positional information, adapted for storing said deviation (e) at least between said earlier time ($t_a$) and said time of estimation ($t_e$),
said estimation means (9) being adapted for determining said first localization ($L_1$) of the aircraft at said time of estimation ($t_e$):

- depending on the deviation (e) recorded at said earlier time ($t_a$) if said satellite positioning data at said earlier time ($t_a$) is validated, or
- depending on a deviation (e) recorded at the last time for which satellite positioning data has been validated, if said satellite positioning data at said earlier time ($t_a$) is not validated.

4. The navigation assistance system (201) according to any of claims 1 or 2, **characterized in that** it comprises a unit (232) for storing a deviation (e') recorded at an earlier time ($t_a$) between second aircraft positional information and a first localization ($L_1$) determined at said earlier time ($t_a$) by said estimation means (203, 209), said storage unit (232) being adapted for storing said deviation (e') at least between said earlier time ($t_a$) and said time of estimation ($t_e$), and **in that** said estimation means (203, 209) are adapted for determining said first localization ($L_1$) of the aircraft at said time of estimation ($t_e$):

- depending on the deviation (e') recorded at said earlier time ($t_a$) if said satellite positioning data at said earlier time ($t_a$) is validated, or
- depending on a deviation (e') recorded at the last time for which satellite positioning data has been validated, if said satellite positioning data at said earlier time ($t_a$) is not validated.

5. The navigation assistance system (1; 201) according to any of the preceding claims, **characterized in that** said estimation means (3,9 ; 203, 209) is adapted for determining a second localization ($L_2$) of the aircraft at a time of estimation ($t_e$), on the basis of hybridization between:

- first positional information ($p_i$) of the aircraft resulting at least partially from accelerometric and gyrometric measurements at said time of estimation ($t_e$), and
- second positional information ($p_{GPS}$) of the aircraft determined from satellite positioning signals received by said satellite navigation data receiver at said time of estimation ($t_e$).

6. The navigation assistance system (1; 201) according to claim 5, **characterized in that** it comprises a selection module (7) adapted for determining an enhanced-reliability localization ($L_i$) of the aircraft, at a time of estimation ($t_e$) associated with a predetermined requirement of responsiveness, said localization with enhanced reliability ($L_i$) being:

- equal to said first localization ($L_1$) if said time to alert is not in accordance with said requirement of responsiveness (TTA),
- equal to said second localization ($L_2$) if said time to alert is in accordance with said requirement of responsiveness (TTA).

7. The navigation assistance system (1; 201) according to any of the preceding claims, **characterized in that** said satellite positioning module (5; 205) comprises means of receiving differential positioning signals and signals from an Sapce Based Augmentation System (SBAS) enhancing the precision of the positioning.

8. The navigation assistance system (1; 201) according to any of the preceding claims, **characterized in that** said first localization ($L_1$) of the aircraft is estimated on the basis of hybridization between said first positional information ($p_i$) of the aircraft and said second positional information ($p_{GPS}$) of the aircraft.

9. A method of aircraft navigation assistance, comprising, in at least a first phase of flight of the aircraft, a step of estimating a first localization of the aircraft at a given time of estimation ($t_e$) comprising:

   - a phase (100; 300) of determining first positional information ($p_i$) of the aircraft, resulting at least partially from accelerometric and gyrometric measurements of an inertial navigation center at said time of estimation ($t_e$),
   - a phase (100; 300) of determining second positional information ($p_{GPS}$) of the aircraft, from satellite positioning data received by a satellite navigation data receiver prior to said time of estimation ($t_e$),
   - a phase (122; 316) of estimating said first localization ($L_1$) of the aircraft on the basis of said first ($p_i$) and second ($p_{GPS}$) positional information, said first localization ($L_1$) being estimated independently from any satellite positioning data received at a predetermined time interval (TTA) preceding said time of estimation ($t_e$) and including said time of estimation ($t_e$), said predetermined time interval being equal to a time to alert (TTA), comprising a step (134; 334) of validating said satellite positioning data, depending on the precision of said satellite positioning data and/or depending on the operating mode of said satellite positioning module (5; 205), the method being **characterized in that** the phase (100) of determining second positional information comprises an estimate of a position ($p_{GPS}$) of the aircraft at least at a given time of determination ($t_a$) and an estimate of a precision (VPL, HPL) of said position ($p_{GPS}$) from said satellite positioning data, and **in that** said validation step comprises a phase of comparing the estimate of the precision (VPL, VHL) of said position ($p_{GPS}$) to a required minimum precision (VAL, HAL) at said time of determination ($t_a$), said satellite positioning data being validated, at a validation time ($t_a$+TTA) after said time of determination ($t_a$), if and only if the estimate of the precision (VPL, HPL) of said position ($p_{GPS}$) is in accordance with said required minimum precision (VAL, HAL), the time interval between said time of determination ($t_a$) and said validation time ($t_a$+TTA) being less or equal to said time to alert (TTA).

10. The method according to claim 9, **characterized in that** said first localization ($L_1$) is determined independently from any satellite positioning data not validated.

11. The method according to any of claims 9 or 10, **characterized in that** it comprises, in at least a second phase of flight of the aircraft, a step of estimating a second localization ($L_2$) of the aircraft at a time of estimation ($t_e$), on the basis of hybridization between:

   - first positional information ($p_i$) of the aircraft resulting at least partially from accelerometric and gyrometric measurements at said time of estimation ($t_e$), and
   - second positional information ($p_{GPS}$) of the aircraft determined from satellite positioning signals received by said satellite navigation data receiver at said time of estimation ($t_e$).

FIG.1

EP 2 765 390 B1

FIG.2

FIG.3

201

203

211 213

Li(te)

207

238

222

234 232

226

+ −

209

205

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2898196 A1